# EUROPÄISCHE PATENTSCHRIFT

(11) **EP 2 439 429 B1**
(45) Veröffentlichungstag und Bekanntmachung des Hinweises auf die Patenterteilung: **18.09.2013**
(21) Anmeldenummer: 11182713.5
(22) Anmeldetag: 26.09.2011
(51) Int. Cl.: F16J 1/00

(54) **Mehrteiliger Kolben für eine Zylinderanordnung**
Multipart piston for a cylinder assembly
Piston en plusieurs parties pour un agencement de cylindres

(30) Priorität: 06.10.2010 DE 102010047633
(43) Veröffentlichungstag der Anmeldung: 11.04.2012
(73) Patentinhaber: Parker Hannifin Manufacturing Germany GmbH & Co. KG, 33659 Bielefeld (DE)
(72) Erfinder: Dr. Fahey, Mark, 9024 Mosgiel (NZ); Dr. Müller, Carsten H., 28816 Stuhr (DE)
(74) Vertreter: Müller, Karl-Ernst

(56) Entgegenhaltungen:
- US-A- 1 882 434
- US-A- 2 306 800
- US-A- 2 574 299
- US-A- 2 576 025
- US-A- 2 772 931

## Beschreibung

Die Erfindung betrifft einen Kolben für einen Zylinder, insbesondere für einen Hydraulikkolbenspeicher oder einen Hydraulikzylinder, aufweisend einen mehrteiligen Aufbau mit zwei aus einem unter Druck nichtverformbaren Material bestehenden, dem im Zylinder herrschenden Druck ausgesetzten Kolbenteilen, die zwischen sich ein Dichtungsteil einschließen, welches aus einem Trägerteil für wenigstens eine in eine auf einer äußeren Umfangsfläche des Trägerteils ausgebildeten Nut eingelegte Kolbendichtung besteht, wobei die Kolbenteile derart eingerichtet sind, dass der im Zylinder herrschende axial auf sie einwirkende Druck eine Erhöhung der Pressung von Teilbereichen des Dichtungsteils gegen die Zylindorwandung bewirkt.

Ein Kolben der vorgenannten Art ist aus der US 2,306,800, die den nächstliegenden Stand der Technik repräsentiert, als Kolben für Schlammpumpen bekannt, der nicht nur eine hohe Dichtigkeit zwischen dem Kolben und der Zylinderwandung gewährleisten soll, sondern auch eine hohe Dichtigkeit innerhalb des mehrteiligen Kolbenkörpers. Hierzu besteht ein derartiger Kolben aus einem zentral innerhalb des Kolbens angeordneten Trägerelement, zwei an der Außenumfangsfläche des Trägers angeordneten Dichtungsringen sowie zwei an in axialer Richtung gegenüberliegenden Seiten des Trägerelements angeordneten Befestigungsringen. Dabei weist das zentrale Trägerelement einen in Axialrichtung mittig angeordneten und radial hervorstehenden Abschnitt auf, an dessen in Axialrichtung gegenüberliegenden Seiten jeweils eine V-förmige Nut zur Aufnahme des jeweiligen Dichtungsrings ausgebildet ist. Die Befestigungsringe werden mittels Schrauben an dem Trägerelement befestigt und greifen mit einem radial über das jeweilige Trägerelementende hinaus stehenden Abschnitt an dem jeweiligen Dichtungsring an, so dass jeder Dichtungsring zwischen der V-förmigen Nut und dem jeweils gegenüberliegenden Befestigungsring festgespannt ist.

Weiterhin ist ein entsprechender Kolben aus der US 1,828,056 A bekannt. Der bekannte Kolben steht aus zwei äußeren plattenförmigen Kolbenteilen, die zwischen sich einen vorzugsweise aus Gummi bestehenden Dichtungsteil einschließen. Die plattenförmigen Kolbenteile sind über eine den Dichtungsteil durchgreifende Kolbenstange derart miteinander verbunden, dass eine Einstellung des Abstandes zwischen den beiden plattenförmigen Kolbenteilen mit einer daraus folgenden radialen Aufweitung des Dichtungsteils möglich ist. Wirkt während des Betriebs der im Zylinder anstehende Druck auf die plattenförmigen Kolbenteile ein, bleibt dies ohne Einfluss auf die Dichtwirkung des Kolbens. Zusätzlich sind in dem zwischen den plattenförmigen Kolbenteilen liegenden Dichtungsteil unterhalb von außenliegenden seitlichen Dichtspitzen Ausnehmungen angeordnet, die jeweils eine das zugeordnete plattenförmige Kolbenteil durchgreifende Bohrung mit dem Zylinderinnenraum verbunden sind, so dass der im Zylinderinnenraum jeweils anstehende Druck ebenfalls in den Ausnehmungen des Dichtungsteils ansteht und dadurch eine radiale Anpressung der zugeordneten Dichtspitzen des Dichtungsteils gegen die Zylinderwandung bewirkt wird. Mit dem bekannten Kolben ist noch der Nachteil verbunden, dass nur kleine Bereiche des Dichtungsteils über die im Dichtungsteil ausgebildeten Ausnehmungen einer Erhöhung der Dichtwirkung zugänglich sind. Zudem unterliegt das aus Gummi bestehende Dichtungsteil generell einem Verschleiß, was die Nachstellung des Dichtungsteils über die Kolbenstange notwendig macht. Schließlich ist der mehrteilige Kolben aus mehreren Einzelteilen aufgebaut und insoweit aufwendig zu fertigen.

Aus der DE 40 08 901 C1 ist eine für Gummispritzmaschinen vorgeschlagene Lösung mit einem eine bei einwirkendem Druck selbstverstärkende Abdichtung aufweisenden Kolben bekannt. Der zugehörige Kolben besteht aus zwei gegeneinander beweglichen Kolbenteilen, die zwischen sich eine in ihrer Breite durch die Relativbewegung der Kolbenteile zueinander veränderbare Ringnut ausbilden, in der ein aus einem elastischen Material bestehender Dichtring eingespannt ist. Kommt es zu einer Druckbeaufschlagung der beiden Kolbenteile, so werden die Kolbenteile gegeneinander so verschoben, dass sich die Breite der Nut verringert und sich die Dichtung nach außen dehnt und somit für eine Abdichtung zwischen der Zylinderwand und dem Kolben sorgt. Mit dieser Lösung ist der Nachteil verbunden, dass die jeweilige Abdichtung lediglich durch den Dichtring erfolgt, der insoweit beim Betrieb ständig Formwechseln unterliegt. Der damit verbundenen Beanspruchung sind für den Dichtring geeignete Dichtmaterialien nicht gewachsen.

Die Anordnung einer gesonderten Kolbendichtung in einer Umfangsnut eines im Übrigen starren Trägerteils ist aus der DE 202 09 125 U1 bekannt.

Der Erfindung liegt die Aufgabe zugrunde, einen Kolben der eingangs genannten, gattungsgemäßen Art zur Verfügung zu stellen, der insbesondere auch bei einer aufgrund hoher Innendrücke auftretenden Aufweitung des Zylinders über eine längere Betriebsdauer ohne Nachstellung für eine sichere Abdichtung des Kolbens in dem Zylinder sorgt.

Die Lösung dieser Aufgabe ergibt sich aus dem Anspruch 1, vorteilhafte Ausgestaltungen und Weiterbildungen der Erfindung sind in den Unteransprüche angegeben.

Die Erfindung sieht in ihrem Grundgedanken vor, dass das zylindrische Trägerteil auf seinen beiden Seiten Einziehungen mit einem dazwischen verbleibenden Steg zur Aufnahme der beiden darin eingreifenden Kolbenteile und mit die Kolbenteilejeweils übergreifenden axialen Wandabschnitten aufweist und die beiden Kolbenteile jeweils hohlzylindrisch mit einer gegen den Steg des aus einem verformbaren Material bestehenden und daher unter Druck radial aufweitbaren Trägerteils anliegenden geschlossenen Stirnwand sowie mit einer gegen den das Kolbenteil übergreifenden Wandabschnitt des Trägerteils anliegenden Umfangswand ausgebildet sind, wobei in den beiden Kolbenteilen in einer symmetrischen Anordnung jeweils deren Umfangswand radial durchgreifende und an den axialen Wandabschnitten des Trägerteils ausgehende Bohrungen ausgebildet sind. Mit der Erfindung ist der Vorteil verbunden, dass die Formänderung von dem die Kolbendichtung tragenden und daher aus einem verformbaren Material bestehenden Trägerteil vollzogen wird und die Dichtung selbst unbeansprucht bleibt. Die beiden Kolbenteile führen auch keine Relativbewegung zueinander aus; vielmehr sind die Kolbenteile, wie auch das Trägerteil so ausgestaltet, dass der axial auf die Kolbenteile einwirkende Druck in eine radial auf das Trägerteil einwirkende und dieses daher radial aufweitende Kraftkomponente umsetzbar ist. Somit sorgt der auf die Kolbenteile jeweils einwirkende Druck selbst für eine entsprechende Aufweitung des Trägerteils. Durch die besondere Ausgestaltung mit der Überlappung von Trägerteil und Kolbenteilen einerseits und der Anordnung der die Umfangswand der Kolbenteile radial durchgreifenden Bohrungen andererseits wird die Erzeugung der radial wirksamen Kraftkomponente sichergestellt, soweit der in den hohlzylindrischen Kolbenteilen und damit auch in den deren Umfangswand durchsetzenden Bohrungen anstehende Druck radial auf die axialen Wandabschnitte des Trägerteils drückt und diese gegen die den Kolben umschlieβende Zylinderwandung presst.

Mit dem besonderen Aufbau des Trägerteils und den in dessen Einziehung eingreifenden Kolbenteilen ist der weitere Vorteil verbunden, dass die beiden Kolbenteile das Trägerteil in axialer Richtung stabilisieren, so dass der mehrteilige Kolben insgesamt über eine Hohe Steifigkeit und Festigkeit verfügt.

Zur Erzeugung der radial auf das Trägerteil einwirkenden Kraftkomponente kann nach einem Ausführungsbeispiel der Erfindung vorgesehen sein, dass die beiden Kolbenteile jeweils hohlzylindrisch mit einer gegen den durch die Einziehungen gebildeten Steg des Trägerteils anliegenden geschlossenen Stirnwand sowie mit einer gegen den das Kolbenteil übergreifenden Wandabschnitt des Trägerteils anliegenden Umfangswand ausgebildet sind, wobei in den beiden Kolbenteilen in einer symmetrischen Anordnung jeweils deren Umfangswand radial durchgreifende und an den axialen Wandabschnitten des Trägerteils ausgehende Bohrungen ausgebildet sind. Durch diese Ausgestaltung wird die Erzeugung der radial wirksamen Kraftkomponente sichergestellt, soweit der in den hohlzylindrischen Kolbenteilen und damit auch in den deren Umfangswand durchsetzenden Bohrungen anstehende Druck radial auf die axialen Wandabschnitte des Trägerteils drückt und diese gegen die den Kolben umschließende Zylinderwandung presst. Damit wird eine über die gesamte Kolbenlänge gleichmäßige Aufweitung des durch den Außendurchmesser des Trägerteils vorgegebenen Kolbenauβendurchmessers parallel zur Zylinderwand erreicht.

Im Rahmen der Erfindung kann auch vorgesehen sein, dass die beiden Kolbenteile jeweils als zylindrische Körper ausgebildet sind, wobei in diesem Fall entsprechend angeordnete Axialbohrungen und davon ausgehende Radialbohrungen vorzusehen sind, um den jeweils anstehenden Druck auf die Wandabschnitte des Trägerteils zu übertragen.

Dabei kann nach einem Ausführungsbeispiel der Erfindung vorgesehen sein, dass in der Umfangsfläche des Trägerteils zwei voneinander beabstandete Nuten mit jeweils einer darin eingelegten Kolbendichtung angeordnet sind, wobei die beiden Kolbendichtungen jeweils in dem jedes der beiden in die Einziehungen des Trägerteils eingreifenden Kolbenteille axial übergreifenden Wandabschnitt des Trägerteils angeordnet sind. Da die die radiale Kraftkomponente bewirkenden Bohrungen im den die Kolbendichtung tragenden axialen Wandabschnitten des Trägerteils münden, ist die Dichtwirkung der von dem Trägerteil getragenen Kolbendichtungen verbessert.

Nach einem Ausführungsbeispiel der Erfindung kann vorgesehen sein, dass der Übergang zwischen dem Steg des Trägerteils und den daran anschlieβenden, die Einziehungen des Trägerteils begrenzenden axialen Wandabschnitten mit einer Stufe derart ausgebildet ist, dass der zwischen den Nuten bestehende Bereich der axialen Wandabschnitte des Trägerteils eine größere Materialstärke aufweist als die daran jeweils anschließenden Bereiche der Wandabschnitte, so dass wegen der geringeren Materialstärke die die Kolbendichtungen tragenden Wandabschnitte leichter nach außen gegen die Zylinderwand verformbar sind.

Soweit nach einem Ausführungsbeispiel der Erfindung vorgesehen ist, dass die Umfangswände der hohlzylindrischen Kolbenteile jeweils eine größere Materialstärke aufweisen als deren Stirnwand, unterstützen die dickwandigeren Umfangswände die dünnwandigen Wandabschnitte des Trägerteils gegen eine unerwünschte Biegung.

In einer zweckmäßigen Ausführungsform bestehen die beiden Kolbenteile aus Metall und das Trägerteil aus einem Kunststoff.

In der Zeichnung ist ein Ausführungsbeispiel der Erfindung wiedergegeben, welches nachstehend beschriehen ist. Es zeigen:
- Fig. 1: Einen mehrteiligen Kolben für eine Zylinderanordnung in einer Perspektivansicht,
- Fig. 2: den Kolben gemäß Figur 1 im Schnitt,
- Fig. 3: den Kolben entsprechend Figur 2 in einer Vorderansicht.

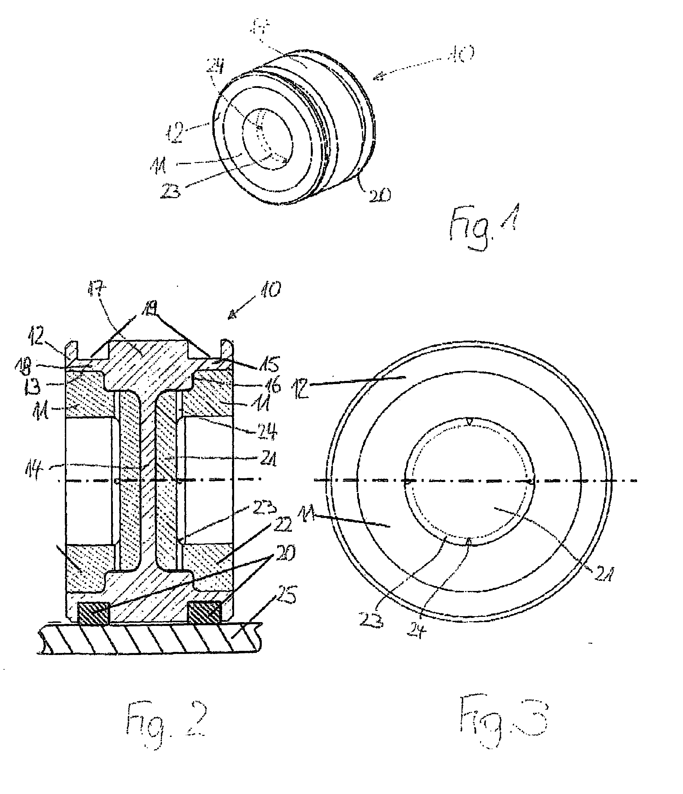

Wie sich aus einer Zusammenschau der Figuren 1 und 2 ergibt, besteht der Kolben 10 aus zwei vorzugsweise metallischen Kolbenteilen 11, die zwischen sich ein aus einem verformbaren Kunststoff bestehendes Trägerteil 12 einschließen. Das in Anpassung an die Wandung eines Zylinders zur Aufnahme des Kolbens 10zylindrisch ausgebildete Trägerteil 12 weist auf seinen beiden Seiten Einziehungen 13 auf, in die die beiden Kolbenteile 11 jeweils eingesetzt sind, wobei zwischen den Einziehungen 13 und den darin eingesetzten Kolbenteilen 11 ein Steg 14 verbleibt und das Trägerteil 12 die in die Einziehungen 13 eingesetztenKolbenteile 11 jeweils mit einem axialen Wandabschnitt 15 übergreift. In dem die Kolbenteile11 übergreifenden Bereichen 18 der axialen Wandabschnitte 15 des Trägerteils 12 ist jeweils eine Nut 19 ausgebildet, in welche eine Kolbendichtung 20 eingesetzt ist, die gegen eine den Kolben 10 umschließende Zylinderwandung 25 anliegt, wie dies lediglich in der unteren Hälfte von Figur 2 angedeutet ist. Der Übergang zwischen dem. Steg 14 und dem Mittelbereich 15 des Trägerteils 12 ist dabei mit einer Stufe 16 derart ausgebildet, dass der zwischen den Nuten 19 bestehende Bereich 17 der axialen Wandabschnitte 15 eine gröβere Materialstärke aufweist als die daran jeweils anschlieβenden Bereiche 18 der Wandabschnitte 15.

Die in die Einziehungen 13 eingesetzten metallischen Kolbenteile 11 sind hohlzylindrisch mit einer jeweils gegen den Steg 14 des Trägerteils 12 anliegenden geschlossenen stirnwand 21 und mit einer gegen den das kolbenteil 11 übergreifenden Wandabschnitt 15 des Trägerteils 12 anliegenden Umfangswand 22 ausgebildet. Dabei weist die Umfangswand 22 eine gröβere Materialstärke auf als die Stirnwand 21. Der Übergang zwischen der Stirnwand 21 und der Umfangswand 22 ist mit einer Fase 23 ausgebildet, und von dieser Fase 23 nehmen bei dem dargestellten Ausführungsbeispiel vier gleichäβig über den Umfang derKolbenteile 11 verteilt angeordnete und radial nach außen zum Trägerteil 12 verlaufende Bohrungen 24 ihren Ausgang, die an den axialen Wandabschnitten des Trägerteils 12 enden.

Soweit im Betrieb in den hohlzylindrischen Kolbenteilen 11 jeweils der Leitungs- bzw. Zylinderdruck ansteht, setzt sich dieser Druck auch über die Bohrungen 24 fort und wirkt daher auf die axialen Wandabschnitte 15 des Trägerteils 12. Aufgrund der geringeren Steifigkeit des Trägerteils 12 bewirkt der anstehende Druck eine radiale Aufweitung des Trägerteils 12 mit axialen Wandabschnitten 15, die in Radialrichtung durch die den Kolben 10 außen umschließende Zylinderwandung 25 begrenzt ist. Dieser Aufweitungseffekt wird positiv begünstigt durch eine Querkontraktion des Trägerteils 12, so dass die gesamte Außenfläche des Trägerteils 12 an der Innenseite der Zylinderwandung 25 anliegt. Gleichzeitig liegt bezüglich der metallischen Kolbenteile 11 ein allseitiger (hydrostatischer) Druck an, so dass die Kolbenteile 11 praktisch keine Verformungen erfahren. Soweit die metallischen Kolbenteile 11 vornehmlich einer Stützwirkung des verformbaren Trägerteils 12 dienen, sind die Kolbenteile 11 im Bereich ihrer Umfangswände 22 derart dickwandig ausgeführt, dass sie die aufliegenden dünnwandigen Bereiche der die Kolbendichtung 20 tragenden axialen Wandabschnitte 15 unterstützen und deren unerwünschte Biegung verhindern.

## Patentansprüche

1. Kolben für einen Zylinder, insbesondere für einen Hydraulikkolbenspeicher oder einen Hydraulikzylinder, aufweisend einen mehrteiligen Aufbau mit zwei aus einem unter Druck nichtverformbaren Material bestehenden, dem im Zylinder herrschenden Druck ausgesetzten Kolbenteilen (11), die zwischen sich ein Dichtungsteil einschließen, welches aus einem Trägerteil (12) für wenigstens eine in eine auf einer äußeren Umfangsfläche des Tragerteils (12) ausgebildeten Nut (19) eingelegte Kolbendichtung (20) besteht, wobei die Kolbenteile (11) derart eingerichtet sind, dass der im Zylinder herrschende axial auf sie einwirkende Druck eine Erhöhung der Pressung von Teilbereichen des Dichtungsteils gegen die Zylinderwandung bewirkt, **dadurch gekennzeichnet, dass** das zylindrische Trägerteil (12) auf seinen beiden Seiten Einziehungen (13) mit einem dazwischen verbleibenden Steg (14) zur Aufnahme der beiden darin eingreifenden Kolbenteile (11) und mit die Kolbenteile (11) jeweils übergreifenden axialen Wandabschnitten (15) aufweist und die beiden Kolbenteile (11) jeweils hohlzylindrisch mit einer gegen den Steg (14) des aus einem verformbaren Material bestehenden und daher unter Druck radial aufweitbaren Trägerteils (12) anliegenden geschlossenen Stirnwand (21) sowie mit einer gegen den das Kolbenteil (11) übergreifenden Wandabschnitt (15) des Trägerteils (12) anliegenden Umfangswand (22) ausgebildet sind, wobei in den beiden Kolbenteilen (11) in einer symmetrischen Anordnung jeweils deren Umfangswand (22) radial durchgreifende und an den axialen Wandabschnitten (15) des Trägerteils (12) ausgehende Bohrungen (24) ausgebildet sind.

2. Kolben nach Anspruch 1, **dadurch gekennzeichnet, dass** in der Umfangsfläche des Trägerteils (12) zwei voneinander beabstandete Nuten (19) mit jeweils einer darin eingelegten Kolbendichtung (20) angeordnet sind, wobei die beiden Kolbendichtungen (20) jeweils in dem jedes der beiden in die Einziehungen (13) des Trägerteils (12) eingreifenden Kolbenteile (11) axial übergreifenden Wandabschnitt (15) des Trägerteils angeordnet sind.

3. Kolben nach einem der Ansprüche 1 bis 2, **dadurch gekennzeichnet, dass** der Übergang zwischen dem Steg (14) des Trägerteils (12) und den daran anschließenden, die Einziehungen (13) des Trägerteils (12) begrenzenden axialen Wandabschnitten (15) mit einer Stufe (16) derart ausgebildet ist, dass der zwischen den Nuten (19) bestehende Bereich (17) der axialen Wandabschnitte (15) des Trägerteils (12) eine größere Materialstärke aufweist als die daran jeweils anschließenden Bereiche (18) der Wandabschnitte (15).

4. Kolben nach einem der Ansprüche 1 bis 3, **dadurch gekennzeichnet, dass** die Umfangswände (22) der hohlzylindrischen Kolbenteile (11) jeweils eine größere Materialstärke aufweisen als deren Stirnwand (21).

5. Kolben nach einem der Ansprüche 1 bis 4, **dadurch gekennzeichnet, dass** die beiden Kolbenteile (11) aus Metall und das Trägerteil (12) aus einem Kunststoff bestehen.

## Claims

1. A piston for a cylinder, in particular for a hydraulic piston accumulator or a hydraulic cylinder, comprising a multi-part structure with two piston parts (11) which are made from a material that is non-deformable under pressure and is exposed to the pressure prevailing in the cylinder, and which enclose between them a sealing part that consists of a carrier part (12) for at least one piston seal (20) that is inserted in a groove (19) formed on the outer circumferential surface of the carrier part (12), wherein the piston parts (11) are set up in such a manner that the pressure prevailing in the cylinder and axially acting on the piston parts effects an increase of the pressing of sections of the sealing part against the cylinder wall, **characterized in that** the cylindrical carrier part (12) has recesses (13) on both sides with a web (14) remaining between them for accommodating the two piston parts (11) that engage therein, and with axial wall portions (15) which each engage over the piston parts (11), and the two piston parts (11) are each formed hollow-cylindrically with a closed front wall (21) resting against the web (14) of the carrier part (12) that is made from a deformable material and therefore is radially expandable, and with a circumferential wall (22) resting against the wall portion (15) of the carrier part (12), which wall portion engages over the piston part (11), wherein symmetrically arranged bores (24) are formed in the two piston parts (11), which bores each radially penetrate the circumferential wall (22) of the piston parts and end at the axial wall portions (15) of the carrier part (12).

2. The piston according to claim 1, **characterized in that** two grooves (19) are arranged in the circumferential
surface of the carrier part (12), which grooves are spaced apart from each other and in each of which a piston seal (20) is inserted, wherein the two piston seals (20) are each arranged in the wall portion (15) of the carrier part, which wall portion axially engages over each of the piston parts (11) that engage in the recesses (13) of the carrier part (12).

3. The piston according to any one of the claims 1 to 2, **characterized in that** the transition between the web (14) of the carrier part (12) and the axial wall portions (15) connected thereto and bordering the recesses (13) is formed with a step (16) in such a manner that the region (17) of the axial wall portions (15) of the carrier part (12), which region is located between the grooves (19), has a greater material thickness than each of the regions (18) of the wall portions (15) connected thereto.

4. The piston according to any one of the claims 1 to 3, **characterized in that** the circumferential walls (22) of the hollow-cylindrical piston parts (11) each have a greater material thickness than the front wall (21) thereof.

5. The piston according to any one of the claims 1 to 4, **characterized in that** the two piston parts (11) are made of metal and the carrier part (12) is made of plastic.

## Revendications

1. Piston pour un cylindre, en particulier pour un réservoir à piston hydraulique ou un vérin hydraulique, présentant une structure en plusieurs parties avec deux parties de piston (11) se composant d'un matériau non déformable sous pression, soumis à la pression régnant dans le cylindre, qui forment entre elles une partie de garniture se composant d'une partie de support (12) pour au moins une garniture de piston (20) insérée dans une rainure réalisée sur une surface périphérique extérieure de la partie de support (12), les parties de piston (11) étant aménagées de telle manière que la pression régnant dans le cylindre, agissant axialement sur celles-ci provoque une augmentation du pressage des zones de la partie de garniture contre la paroi du cylindre, **caractérisé en ce que** la partie de support cylindrique (12) présente sur ses deux côtés des rétrécissements (13) avec une nervure (14) restant au milieu pour le logement des deux parties de piston (11) s'engageant dedans et avec des sections de paroi (15) axiales recouvrant respectivement les parties de piston (11) et les deux parties de piston (11) sont réalisées respectivement de manière cylindrique et creuse avec une paroi avant (21) fermée reposant contre la nervure (14) de la partie de support (12) se composant d'un matériau déformable et pouvant être élargie radialement par conséquent sous pression ainsi qu'avec une paroi périphérique (22) reposant contre la section de paroi (15) recouvrant la partie de piston (11) de la partie de support (12), des perçages (24) partant sur les sections de paroi (15) axiales de la partie de support (12) et recouvrant radialement respectivement leur paroi périphérique (22) étant réalisés dans les deux parties de piston (11) dans un agencement symétrique.

2. Piston selon la revendication 1, **caractérisé en ce que** deux rainures espacées l'une de l'autre (19) avec respectivement une garniture de piston (20) insérée dedans sont disposées dans la surface périphérique de la partie de support (12), les deux garnitures de piston (20) étant respectivement disposées dans la section de paroi (15) de la partie de support recouvrant axialement chacune des deux parties de piston (11) s'engageant dans les rétrécissements (13) de la partie de support (12).

3. Piston selon l'une quelconque des revendications 1 à 2, **caractérisé en ce que** la transition entre la nervure (14) de la partie de support (12) et les sections de paroi (15) axiales délimitant les rétrécissements (13) de la partie de support (12) et contigües à celle-ci est réalisée avec un gradin (16) de telle manière que la zone (17) existant entre les rainures (19) des sections de paroi (15) axiales de la partie de support (12) présente une plus grande épaisseur de matériau que les zones (18) contigües respectivement des sections de paroi (15).

4. Piston selon l'une quelconque des revendications 1 à 3, **caractérisé en ce que** les parois périphériques (22) des parties de piston (11) cylindriques et creuses présentent respectivement une plus grande épaisseur de matériau que leur paroi frontale (21).

5. Piston selon l'une quelconque des revendications 1 à 4, **caractérisé en ce que** les deux parties de piston (11) se composent de métal et la partie de support (12) se compose d'une matière plastique.
